(19) Europäisches Patentamt / European Patent Office / Office européen des brevets

(11) **EP 4 148 092 A1**

(12) **EUROPEAN PATENT APPLICATION**
published in accordance with Art. 153(4) EPC

(43) Date of publication:
**15.03.2023 Bulletin 2023/11**

(21) Application number: **21800082.6**

(22) Date of filing: **30.04.2021**

(51) International Patent Classification (IPC):
**C09D 5/00** (2006.01)        **C09D 201/00** (2006.01)
**C09K 3/18** (2006.01)        **C09D 7/65** (2018.01)
**C09J 7/22** (2018.01)        **C09J 7/38** (2018.01)

(52) Cooperative Patent Classification (CPC):
**C09D 5/00; C09D 7/65; C09D 201/00; C09J 7/22;
C09J 7/38; C09K 3/18**

(86) International application number:
**PCT/JP2021/017311**

(87) International publication number:
**WO 2021/225130 (11.11.2021 Gazette 2021/45)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **08.05.2020 JP 2020082732**

(71) Applicant: **NITTO DENKO CORPORATION**
**Ibaraki-shi**
**Osaka 567-8680 (JP)**

(72) Inventors:
• **EGUCHI, Kenichi**
  **Ibaraki-shi, Osaka 567-8680 (JP)**
• **ISHII, Aika**
  **Ibaraki-shi, Osaka 567-8680 (JP)**
• **ONA, Haruka**
  **Ibaraki-shi, Osaka 567-8680 (JP)**
• **YANO, Hikaru**
  **Ibaraki-shi, Osaka 567-8680 (JP)**
• **FUJITA, Hiroyuki**
  **Ibaraki-shi, Osaka 567-8680 (JP)**

(74) Representative: **Gill Jennings & Every LLP**
**The Broadgate Tower**
**20 Primrose Street**
**London EC2A 2ES (GB)**

(54) **COATING MATERIAL AND LAMINATE**

(57)    The present invention relates to a coating material containing a resin component and at least one kind of oil component P, in which the oil component P can exude out from a cured or dried coating film layer to which the coating material has been applied when a temperature drops to a predetermined value or less, a wetting parameter is 0.5 $(J/cm^3)^{1/2}$ or less, and a gel fraction of the coating film layer is 30% or more.

## FIG. 1

**Description**

TECHNICAL FIELD

The present invention relates to a coating material, and more particularly to a coating material used for preventing adhesion of snow or ice on a surface of an object such as a solar panel, an aircraft, a railway, an automobile, a wind power generator, a house, a traffic light, and a signboard. The present invention also relates to a laminate formed using the coating material.

BACKGROUND ART

Adhesion of ice (ice adhesion) on an object surface and adhesion of snow (snow adhesion) due to snowfall cause many damages and obstacles in various fields. For example, ice adhesion on airfoils, snow adhesion and freezing on a lower part of an engine vehicle, snow adhesion on headlights of an automobile, ice adhesion on blades of a solar panel or a wind power generator, snow adhesion and freezing on a lamp of a traffic light, and the like may be obstacles to operation, driving, and safety thereof.

In addition, snow adhesion and freezing on a house roof, a signboard, or the like may cause damage to a person due to damage to these structures or falling snow.

In related art, in each industrial field, various coating materials containing oil have been developed as a countermeasure for preventing such snow adhesion and ice adhesion on the object surface.

For example, Patent Literature 1 discloses a coating material for water-repellent coating, which contains one kind or a mixture of a plurality of kinds of fluorine resin powder or inorganic fine powder whose surface has been subjected to a hydrophobic treatment, a silicone resin binder, and one kind or a mixture of a plurality of kinds of silicone oil and fluorosilicone oil.

CITATION LIST

PATENT LITERATURE

Patent Literature 1: JP2000-026844A

SUMMARY OF INVENTION

TECHNICAL PROBLEM

However, according to a study of the present inventors, there is a problem that abrasion resistance of a coating film layer obtained from the coating material in related art as disclosed in Patent Literature 1.is low

The present invention has been made in view of the above circumstances of the related art, and an object of the present invention is to provide a coating material which can form a coating film layer having high abrasion resistance and an excellent ice and/or snow adhesion prevention function.

SOLUTION TO PROBLEM

As a result of intensive studies to solve the above problems, the present inventors have focused on a wetting parameter and a gel fraction of a coating film layer obtained from a coating material, and have completed the present invention.

That is, the present invention relates to the following <1> to <7>.

<1> A coating material containing a resin component and at least one kind of oil component P, in which

the oil component P can exude out from a cured or dried coating film layer to which the coating material has been applied when a temperature drops to a predetermined value or less,
a wetting parameter determined by the following formula (1) is 0.5 $(J/cm^3)^{1/2}$ or less, and
a gel fraction of the coating film layer determined by the following formula (2) is 30% or more,

$$\text{Wetting parameter } [(J/cm^3)^{1/2}] = |\text{value of solubility parameter of coating film layer -}$$

$$\text{value of solubility parameter of oil component P}| \dots (1)$$

(in the formula (1), the coating film layer is a coating film layer obtained by curing or drying the coating material),

$$\text{Gel fraction (\%)} = \{\text{mass (g) of coating film layer after heating and drying/mass (g)}$$

$$\text{of coating film layer}\} \times 100 \dots (2)$$

(in the formula (2), the coating film layer is a coating film layer obtained by curing or drying the coating material, and the coating film layer after heating and drying is a coating film layer obtained by immersing the coating film layer in toluene for 24 hours and heating and drying the coating film layer in an environment of 150°C for 2 hours).

<2> The coating material according to <1>, in which
the wetting parameter is 0.3 $(J/cm^3)^{1/2}$ or less.
<3> The coating material according to <1> or <2>, in which
the gel fraction exceeds 60%.
<4> The coating material according to any one of <1> to <3>, further including an oil component Q.
<5> The coating material according to any one of <1> to <4>, in which
at least one of the oil component P or the oil component Q is a carbinol-modified silicone oil or an alkyl-modified silicone oil.
<6> The coating material according to any one of <1> to <5>, in which

a solubility parameter contribution value determined by the following formula (3) is 0.1 or more,

$$\text{Solubility parameter contribution value} = f \times \varphi \times 100 \dots (3)$$

(in the formula (3), f is a value determined by the following formula (3a), and $\varphi$ is a value determined by the following formula (3b)),

$$f = ((f_{d1} - f_{d2})^2 + (f_{p1} - f_{p2})^2 + (f_{h1} - f_{h2})^2)^{0.5} \dots (3a)$$

(in the formula (3a), fai is a value determined by the following formula (3a1), $f_{d2}$ is a value determined by the following formula (3a2), $f_{p1}$ is a value determined by the following formula (3a3), $f_{p2}$ is a value determined by the following formula (3a4), $f_{h1}$ is a value determined by the following formula (3a5), and $f_{h2}$ is a value determined by the following formula (3a6)),

$$f_{d1} = \delta_{d1}/(\delta_{d1} + \delta_{p1} + \delta_{h1}) \dots (3a1)$$

$$f_{d2} = \delta_{d2}/(\delta_{d2} + \delta_{p2} + \delta_{h2}) \dots (3a2)$$

$$f_{p1} = \delta_{p1}/(\delta_{d1} + \delta_{p1} + \delta_{h1}) \dots (3a3)$$

$$f_{p2} = \delta_{p2}/(\delta_{d2} + \delta_{p2} + \delta_{h2}) \dots (3a4)$$

$$f_{h1} = \delta_{h1}/(\delta_{d1} + \delta_{p1} + \delta_{h1}) \dots (3a5)$$

$$f_{h2} = \delta_{h2}/(\delta_{d2} + \delta_{p2} + \delta_{h2}) \ldots (3a6)$$

(in the formulae (3a1) to (3a6),
$\delta_{d1}$ is energy $(J/cm^3)^{1/2}$ due to a dispersing force of a compatible molecular unit,
$\delta_{d2}$ is energy $(J/cm^3)^{1/2}$ due to a dispersing force of an incompatible molecular unit,
$\delta_{p1}$ is energy $(J/cm^3)^{1/2}$ due to a dipole interaction of the compatible molecular unit,
$\delta_{p2}$ is energy $(J/cm^3)^{1/2}$ due to a dipole interaction of the incompatible molecular unit,
$\delta_{h1}$ is energy $(J/cm^3)^{1/2}$ due to a hydrogen bond of the compatible molecular unit,
$\delta_{h2}$ is energy $(J/cm^3)^{1/2}$ due to a hydrogen bond of the incompatible molecular unit,
the compatible molecular unit is a molecular unit that exists in the largest amount in the coating film layer obtained by curing or drying the coating material, and
the incompatible molecular unit is a molecular unit in the oil component P for which a difference in solubility parameter from the compatible molecular unit is 0.01 $(J/cm^3)^{1/2}$ or more),

$$\varphi = (1 - \text{gel fraction } (\%)/100) \times m \ldots (3b)$$

(in the formula (3b), the gel fraction (%) is a value determined by the formula (2), and m is a value determined by the following formula (3b1)),

$$m = \{\text{mass (g) of incompatible molecular unit contained in all oil components in coating film layer/mass (g) of all oil components in coating film layer}\} \ldots (3b1)$$

(in the formula (3b1), the "mass of incompatible molecular unit contained in all oil components in coating film layer" is calculable by NMR measurement of all the oil components contained in the coating film layer obtained by curing or drying the coating material, and all the oil components are residues obtained by immersing the coating film layer in toluene for 24 hours and drying the coating film layer in an environment of 150°C for 2 hours).

<7> A laminate including the coating film layer obtained by curing or drying the coating material according to any one of <1> to <6> and a pressure-sensitive adhesive layer.

ADVANTAGEOUS EFFECTS OF INVENTION

A coating film layer obtained from a coating material of the present invention has high abrasion resistance and an excellent ice and/or snow adhesion prevention function.

BRIEF DESCRIPTION OF DRAWINGS

[FIG. 1] FIG. 1 is a cross-sectional view showing a coating film layer formed from a coating material of the present invention together with an object to be coated.
[FIG. 2] FIG. 2 is a cross-sectional view showing an example of a layer structure including the coating film layer formed from the coating material of the present invention together with the object to be coated.
[FIG. 3] FIG. 3 is a schematic view of a Gakushin type abrasion tester used in Examples.

DESCRIPTION OF EMBODIMENTS

Hereinafter, embodiments of the present invention will be described in more detail, but the present invention is not limited to the following embodiments at all.

[Coating Material]

A coating material of the present invention contains a resin component and at least one kind of oil component P.

(Resin Component)

The resin component may be any of a moisture curable resin that is cured by moisture, an ultraviolet curable resin that is cured by ultraviolet irradiation, and a thermosetting resin that is cured by being heated. In addition, the resin component may be a resin that is cured by addition of a curing agent that cross-links with the resin component or a thermoplastic resin.

Examples of the resin component include, but are not particularly limited to, silicone resins, polyurethane resins, polyurethane acrylic resins, vinyl chloride resins, polyester resins, elastomers, fluorine resins, polyamide resins, polyolefin resins (polyethylene, polypropylene, etc.), acrylic resins, ethylene-propylene-diene rubbers (EPDM), styrene-based thermoplastic elastomers (SEBS), and styrene-butadiene rubbers (SBR).

Any appropriate silicone resin may be adopted as the silicone resin as long as the effects of the present invention are not impaired. The silicone resin may be of only one kind or of two or more kinds. Such a silicone resin may be a condensation-type silicone resin or an addition-type silicone resin. In addition, such a silicone resin may be a one-component silicone resin (e.g., a one-component room temperature vulcanizing (RTV) resin) which is dried alone, or may be a two-component silicone resin (e.g., a two-component room temperature vulcanizing (RTV) resin).

Examples of the silicone resin include one-component RTV rubbers (e.g., KE-3423, KE-347, KE-3475, KE-3495, KE-4895, KE-4896, KE-1830, KE-1884, KE-3479, KE-348, KE-4897, KE-4898, KE-1820, KE-1825, KE-1831, KE-1833, KE-1885, KE-1056, KE-1151, KE-1842, KE-1886, KE-3424G, KE-3494, KE-3490, KE-40RTV, KE-4890, KE-3497, KE-3498, KE-3493, KE-3466, KE-3467, KE-1862, KE-1867, KE-3491, KE-3492, KE-3417, KE-3418, KE-3427, KE-3428, KE-41, KE-42, KE-44, KE-45, KE-441, KE-445, and KE-45S) manufactured by Shin-Etsu Chemical Co., Ltd., two-component RTV rubbers (e.g., KE-1800T-A/B, KE-66, KE-1031-A/B, KE-200, KE-118, KE-103, KE-108, KE-119, KE-109E-A/B, KE-1051J-A/B, KE-1012-A/B, KE-106, KE-1282-A/B, KE-1283-A/B, KE-1800-A/B/C, KE-1801-A/B/C, KE-1802-A/B/C, KE-1281-A/B, KE-1204-A/B, KE-1204-AL/BL, KE-1280-A/B, KE-513-A/B, KE-521-A/B, KE-1285-A/B, KE-1861-A/B, KE-12, KE-14, KE-17, KE-113, KE-24, KE-26, KE-1414, KE-1415, KE-1416, KE-1417, KE-1300T, KE-1310ST, KE-1314-2, KE-1316, KE-1600, KE-117603-A/B, KE-1606, KE-1222-A/B, and KE-1241) manufactured by Shin-Etsu Chemical Co., Ltd., silicone sealants (e.g., KE-42AS, KE-420, and KE-450) manufactured by Shin-Etsu Chemical Co., Ltd., rubber compounds (e.g., KE-655-U, KE-675-U, KE-931-U, KE-941-U, KE-951-U, KE-961-U, KE-971-U, KE-981-U, KE-961T-U, KE-971T-U, KE-871C-U, KE-9410-U, KE-9510-U, KE-9610-U, KE-9710-U, KE-742-U, KE-752-U, KE-762-U, KE-772-U, KE-782-U, KE-850-U, KE-870-U, KE-880-U, KE-890-U, KE-9590-U, KE-5590-U, KE-552-U, KE-582-U, KE-552B-U, KE-555-U, KE-575-U, KE-541-U, KE-551-U, KE-561-U, KE-571-U, KE-581-U, KE-520-U, KE-530B-2-U, KE-540B-2-U, KE-1551-U, KE-1571-U, KE-152-U, KE-174-U, KE-3601SB-U, KE-3711-U, KE-3801M-U, KE-5612G-U, KE-5620BL-U, KE-5620W-U, KE-5634-U, KE-7511-U, KE-7611-U, KE-765-U, KE-785-U, KE-7008-U, KE-7005-U, KE-503-U, KE-5042-U, KE-505-U, KE-6801-U, and KE-136Y-U) manufactured by Shin-Etsu Chemical Co., Ltd., a liquid silicone rubber injection molding system (LIMS) (e.g., KEG-2000-40A/B, KEG-2000-50A/B, KEG-2000-60A/B, KEG-2000-70A/B, KEG-2001-40A/B, KEG-2001-50A/B, KE-1950-10A/B, KE-1950-20A/B, KE-1950-30A/B, KE-1950-35A/B, KE-1950-40A/B, KE-1950-50A/B, KE-1950-60A/B, KE-1950-70A/B, KE-1935A/B, KE-1987A/B, KE-1988A/B, KE-2019-40A/B, KE-2019-50A/B, KE-2019-60A/B, KE-2017-30A/B, KE-2017-40A/B, KE-2017-50A/B, KE-2090-40A/B, KE-2090-50A/B, KE-2090-60A/B, KE-2090-70A/B, KE-2096-40A/B, KE-2096-50A/B, and KE-2096-60A/B) manufactured by Shin-Etsu Chemical Co., Ltd., dimethiconol (e.g., X-21-5847, and X-21-5849) manufactured by Shin-Etsu Chemical Co., Ltd., LR7665 series manufactured by Wacker Asahikasei Silicone Co., Ltd., LR3033 series manufactured by Wacker Asahikasei Silicone Co., Ltd., TSE3032 series manufactured by Momentive Performance Co., Ltd., Sylgard 184 manufactured by Dow Corning Toray Co., Ltd., etc.

(Oil Component)

In the present invention, at least one kind of oil component P is used.

The oil component P can exude out from a cured or dried coating film layer to which the coating material of the present invention has been applied when a temperature drops to a predetermined value or less.

The term "a predetermined value or less" means, for example, a freezing point (0°C) or less.

Examples of the oil component P include silicone oil, fluorine oil, hydrocarbon-based oil, polyether-based oil, ester-based oil, phosphorus compound-based oil, mineral-based oil, etc.

Examples of the silicone oil include silicone oils (e.g., BY16-201) manufactured by Dow Corning Toray Co., Ltd., silicone oils (e.g., KF-6000, KF-6001, KF-6002, KF-6003, KF-6011, KF-6011P, KF-6043, PAM-E, KF-8010, X-22-161A, X-22-161B, KF-8012, KF-8008, X-22-1660B-3, X-22-9409, X-22-4952, X-22-4272, KF-6123, X-22-162C, X-21-5841, KF-9701, KF-864, KF-865, KF-868, KF-859, KF-393, KF-860, KF-880, KF-8004, KF-8002, KF-8005, KF-867, KF-8021, KF-869, KF-861, X-22-3939A, X-22-4039, X-22-4015, X-22-3701E, X-22-173BX, X-22-173DX, X-22-176F, X-22-176DX, X-22-176GX-A, and X-22-3710) manufactured by Shin-Etsu Chemical Co., Ltd., etc.

The coating material of the present invention preferably further contains an oil component Q.

Examples of the oil component Q include silicone oil, fluorine oil, hydrocarbon-based oil, polyether-based oil, ester-based oil, phosphorus compound-based oil, mineral-based oil, etc.

Examples of the silicone oil include silicone oils (e.g., KF96L series, KF96 series, KF69 series, KF99 series, KF50 series, KF54 series, KF410 series, KF412 series, KF414 series, FL series, KF-6000, KF-6001, KF-6002, and KF-6003) manufactured by Shin-Etsu Chemical Co., Ltd., silicone oils (e.g., Element 14 * PDMS series, TSF404 series, TSF410 series, TSF4300 series, TSF431 series, TSF433 series, TSF437 series, TSF4420 series, and TSF4421 series) manufactured by Momentive Performance Co., Ltd., silicone oils (e.g., BY16-846 series, SF8416 series, SF8427 series, SF-8428 series, SH200 series, SH203 series, SH230 series, SF8419 series, FS1265 series, SH510 series, SH550 series, SH710 series, FZ-2110 series, FZ-2203 series, and BY16-201) manufactured by Dow Coming Toray Co., Ltd., silicone oils (e.g., WACKER (registered trademark) SILICONE FLUID AK series, WACKER (registered trademark) SILICONE FLUID AP series, WACKER (registered trademark) SILICONE FLUID AR series, WACKER (registered trademark) SILICONE FLUID AS series, WACKER (registered trademark) TN series, WACKER (registered trademark) L series, and WACKER (registered trademark) AF series) manufactured by Wacker Asahikasei Silicone Co., Ltd., etc.

In the present invention, at least one of the oil component P or the oil component Q is preferably a carbinol-modified silicone oil or an alkyl-modified silicone oil from the viewpoint of improving abrasion resistance and ice and/or snow adhesion prevention function.

(Characteristics of Resin Component and Oil Component)

Hereinafter, when two kinds of oil components (oil component P and oil component Q) are used, characteristics of the resin component and the oil components will be described.

As the oil component P, the oil component Q, and the resin component, for example, a combination satisfying the following properties 1) and 2) is preferably selected.

1) The resin component and/or the oil component Q and the oil component P are not phase-separated and are compatible with each other at a temperature at which bleeding of the oil component P is not required, for example, at a normal temperature of about 20°C to 80°C, which is significantly higher than a predetermined value such as a freezing point. On the other hand, the resin component and/or the oil component Q and the oil component P are phase-separated under an environment of a temperature at which the bleeding of the oil component P is required, for example, a temperature of a predetermined value, such as a freezing point, or less.

2) The oil component Q has affinity for the resin component at both the temperature at which the bleeding of the oil component P is not required and the temperature at which the bleeding of the oil component P is required. On the other hand, in the presence of the oil component Q, a behavior of the oil component P is changed depending on whether a temperature is the temperature at which the bleeding of the oil component P is not required or the temperature at which the bleeding of the oil component P is required. In other words, the oil component P functions as a low-temperature phase-separable oil component that is phase-separated from the resin component and/or the oil component Q.

In addition, it is empirically known that a value (SP value) of a solubility parameter serves as an indicator for determining ease of mixing of a solvent and a solute. A relationship between the oil component Q, the oil component P, and the resin component described above can also be described based on a relationship between values of the solubility parameters of these. The value of the solubility parameter can be measured by a method described in Examples.

In order to satisfy the relationships 1) and 2) described above, at least a difference between the value of the solubility parameter of the resin component and the value of the solubility parameter of the oil component Q is preferably set to be smaller than a difference between the value of the solubility parameter of the resin component and the value of the solubility parameter of the oil component P. The difference in solubility parameter between the oil component Q and the resin component is preferably set to 0.6 $(J/cm^3)^{1/2}$ or less.

For example, when the relationships 1) and 2) are satisfied, the oil component P is compatible with the resin component and/or the oil component Q and does not bleed at a temperature at which bleeding of the oil component P is not required. On the other hand, when the temperature is changed to the temperature at which the bleeding of the oil component P is required, the oil component P is phase-separated from the resin component and/or the oil component Q to exude out from the resin component, and can function as a bleedable low-temperature phase-separable oil component.

Here, the embodiment in which the difference between the value of the solubility parameter of the resin component and the values of the solubility parameters of the oil component P and the oil component Q is set to a predetermined relationship, thereby exuding (bleeding) a part of the oil component, particularly the oil component P, in the coating film layer to prevent ice and/or snow adhesion has been described as an example, but the scope of the present invention is not limited to these embodiments.

For example, compatibility can be controlled in the same manner by utilizing a difference in molecular weight or a difference in molecular structure between the oil component Q and the oil component P, and the oil component P can be phase-separated from the resin component and/or the oil component Q to exude out from the coating film layer when the temperature drops to the predetermined value or less.

In the present invention, a wetting parameter determined by the following formula (1) is 0.5 $(J/cm^3)^{1/2}$ or less.

$$\text{Wetting parameter } [(J/cm^3)^{1/2}] = |\text{value of solubility parameter of coating film layer -}$$

$$\text{value of solubility parameter of oil component P}| \dots (1)$$

(In the formula (1), the coating film layer is a coating film layer obtained by curing or drying the above coating material).

As shown in the above formula (1), the wetting parameter is obtained as an absolute value of a difference between a value $SP_1$ of the solubility parameter of the coating film layer obtained by curing or drying the coating material of the present invention and a value $SP_2$ of the solubility parameter of the oil component P. The value of the solubility parameter can be measured by the method described in Examples.

When the wetting parameter is 0.5 $(J/cm^3)^{1/2}$ or less, wettability of the bleeding oil component P to the coating film layer to be formed is increased, and oil efficiently spreads to a surface of the coating film layer even when a small amount of oil bleeds. Accordingly, an effect of preventing the ice and/or snow adhesion can be exhibited with a smaller amount of oil component.

The wetting parameter is preferably 0.3 $(J/cm^3)^{1/2}$ or less, more preferably 0.25 $(J/cm^3)^{1/2}$ or less, and still more preferably 0.2 $(J/cm^3)^{1/2}$ or less. The wetting parameter is preferably 0.01 $(J/cm^3)^{1/2}$ or more, more preferably 0.03 $(J/cm^3)^{1/2}$ or more, and still more preferably 0.05 $(J/cm^3)^{1/2}$ or more.

In the present invention, the gel fraction of the coating film layer determined by the following formula (2) is 30% or more.

$$\text{Gel fraction (\%)} = \{\text{mass (g) of coating film layer after heating and drying/mass (g)}$$

$$\text{of coating film layer}\} \times 100 \dots (2)$$

(In the formula (2), the coating film layer is a coating film layer obtained by curing or drying the coating material of the present invention. The coating film layer after heating and drying is a coating film layer obtained by immersing the coating film layer in toluene for 24 hours and heating and drying the coating film layer in an environment of 150°C for 2 hours).

When the gel fraction is 30% or more, the coating material of the present invention can sufficiently contain a resin component, and a coating film layer having high abrasion resistance can be obtained.

The gel fraction is preferably more than 60%, more preferably 65% or more, and still more preferably 70% or more. The gel fraction is preferably 95% or less, more preferably 90% or less, still more preferably 85% or less.

Further, in the present invention, it is preferable that a solubility parameter contribution value obtained by the following formula (3) is 0.1 or more.

$$\text{Solubility parameter contribution value} = f \times \varphi \times 100 \dots (3)$$

(In the formula (3), f is a value determined by the following formula (3a), and $\varphi$ is a value determined by the following formula (3b)).

$$f = ((f_{d1} - f_{d2})^2 + (f_{p1} - f_{p2})^2 + (f_{h1} - f_{h2})^2)^{0.5} \dots (3a)$$

(In the formula (3a), fai is a value determined by the following formula (3a1), $f_{d2}$ is a value determined by the following formula (3a2), $f_{p1}$ is a value determined by the following formula (3a3), $f_{p2}$ is a value determined by the following formula (3a4), $f_{h1}$ is a value determined by the following formula (3a5), and $f_{h2}$ is a value determined by the following formula (3a6)).

$$f_{d1} = \delta_{d1}/(\delta_{d1} + \delta_{p1} + \delta_{h1}) \ldots (3a1)$$

$$f_{d2} = \delta_{d2}/(\delta_{d2} + \delta_{p2} + \delta_{h2}) \ldots (3a2)$$

$$f_{p1} = \delta_{p1}/(\delta_{d1} + \delta_{p1} + \delta_{h1}) \ldots (3a3)$$

$$f_{p2} = \delta_{p2}/(\delta_{d2} + \delta_{p2} + \delta_{h2}) \ldots (3a4)$$

$$f_{h1} = \delta_{h1}/(\delta_{d1} + \delta_{p1} + \delta_{h1}) \ldots (3a5)$$

$$f_{h2} = \delta_{h2}/(\delta_{d2} + \delta_{p2} + \delta_{h2}) \ldots (3a6)$$

(In the formulae (3a1) to (3a6),

$\delta_{d1}$ is energy $(J/cm^3)^{1/2}$ due to a dispersing force of a compatible molecular unit,
$\delta_{d2}$ is energy $(J/cm^3)^{1/2}$ due to a dispersing force of an incompatible molecular unit,
$\delta_{p1}$ is energy $(J/cm^3)^{1/2}$ due to a dipole interaction of the compatible molecular unit,
$\delta_{p2}$ is energy $(J/cm^3)^{1/2}$ due to a dipole interaction of the incompatible molecular unit,
$\delta_{h1}$ is energy $(J/cm^3)^{1/2}$ due to a hydrogen bond of the compatible molecular unit,
$\delta_{h2}$ is energy $(J/cm^3)^{1/2}$ due to a hydrogen bond of the incompatible molecular unit,
the compatible molecular unit is a molecular unit that exists in the largest amount in the coating film layer obtained by curing or drying the coating material, and
the incompatible molecular unit is a molecular unit in the oil component P for which a difference in solubility parameter from the compatible molecular unit is 0.01 $(J/cm^3)^{1/2}$ or more).

$$\varphi = (1 - \text{gel fraction} (\%)/100) \times m \ldots (3b)$$

(In the formula (3b), the gel fraction (%) is a value determined by the following formula (2), and m is a value determined by the following formula (3b1)).

$$m = \{\text{mass (g) of incompatible molecular unit contained in all oil components in coating film layer/mass (g) of all oil components in coating film layer}\} \ldots (3b1)$$

(In the formula (3b1), the "mass of incompatible molecular unit contained in all oil components in coating film layer" can be calculated by NMR measurement of all the oil components contained in the coating film layer obtained by curing or drying the coating material. All the oil components are residues obtained by immersing the coating film layer in toluene for 24 hours and drying the coating film layer in an environment of 150°C for 2 hours).

The solubility parameter contribution value is more preferably 0.2 or more, still more preferably 0.3 or more, and particularly preferably 0.4 or more.

An upper limit of the solubility parameter contribution value may be, for example, 3.0 or less, preferably 2.5 or less, more preferably 2.0 or less, and still more preferably 1.5 or less.

The solubility parameter contribution value represents a degree of compatibility of the coating film layer. The larger the value is, the more incompatible the coating film layer is. When the solubility parameter contribution value is within the range described above, the contained oil component easily bleeds, and thus a high effect of preventing the ice and/or snow adhesion can be exhibited.

As is clear from the above description, the oil component P and the oil component Q do not need to be distinguished from each other in terms of substances, and may be distinguished from each other in terms of functions and actions described above. Therefore, both the oil component P and the oil component Q do not need to be constituted by one oil component, and each of the oil component P and the oil component Q may contain a plurality of oil components as long as the above-described conditions are satisfied.

(Other Components)

The coating material of the present invention may further contain an inorganic filler such as silica, a crosslinking agent, and a curing catalyst.

Examples of the silica include silica (e.g., AEROSIL 50, 130, 200, 300, R972, R974, R976, RX50, RX200, RX300, RY50, RY300, R7200, R8200, and R9200) manufactured by Nippon Aerosil Co., Ltd., etc.

Examples of the crosslinking agent include crosslinking agents (e.g., ethylsilicate 40, ethylsilicate 48, methylsilicate 51, methylsilicate 53A, EMS-485, ethylsilicate 28, ethylsilicate 28P, N-propylsilicate, N-butylsilicate, HAS-1, HAS-6, and HAS-10) manufactured by Colcoat Co., Ltd., crosslinking agents (e.g., methyltrimethoxysilane, dimethyldimethoxysilane, tetraethoxysilane, methyltriethoxysilane, dimethyldiethoxysilane, n-propyltrimethoxysilane, n-propyltriethoxysilane, hexyltrimethoxysilane, hexyltriethoxysilane, and octyltriethoxysilane) manufactured by Shin-Etsu Chemical Co., Ltd., crosslinking agents (e.g., Dynasylan Silbond 40) manufactured by Evonik Japan Co., Ltd., etc.

Examples of the curing catalyst include curing catalysts (e.g., Pocat 25) manufactured by Nippon Chemical Industrial Co., Ltd., curing catalysts (e.g., dibutyltin dilaurate) manufactured by Tokyo Chemical Industry Co., Ltd., curing catalysts (e.g., CAT-PL-50T) manufactured by Shin-Etsu Chemical Co., Ltd., etc.

(Method for Producing Coating Material)

The coating material of the present invention can be obtained by mixing and/or stirring the components described above by a known method. A content of each component in the coating material is as follows.

The content of the resin component can be set to preferably 15 mass% or more, more preferably 20 mass% or more, and still more preferably 25 mass% or more, based on a total mass of the finally formed coating film layer. The content of the resin component may be set to preferably 95 mass% or less, more preferably 90 mass% or less, and still more preferably 85 mass% or less, based on the total mass of the finally formed coating film layer.

The content of the oil component P may be set to preferably 2 mass% or more, more preferably 5 mass% or more, and still more preferably 10 mass% or more, based on the total mass of the finally formed coating film layer. The content of the oil component P may be set to preferably 85 mass% or less, more preferably 80 mass% or less, and still more preferably 75 mass% or less, based on the total mass of the finally formed coating film layer.

The content of the oil component Q may be set to preferably 2 mass% or more, more preferably 5 mass% or more, and still more preferably 10 mass% or more, based on the total mass of the finally formed coating film layer. The content of the oil component Q may be set to preferably 85 mass% or less, more preferably 80 mass% or less, and still more preferably 75 mass% or less, based on the total mass of the finally formed coating film layer.

A content of silica may be set to preferably 2 mass% or more, more preferably 5 mass% or more, and still more preferably 10 mass% or more, based on the total mass of the finally formed coating film layer. The content of silica may be set to preferably 40 mass% or less, more preferably 30 mass% or less, and still more preferably 20 mass% or less, based on the total mass of the finally formed coating film layer.

A content of the crosslinking agent may be set to preferably 0.1 mass% or more, more preferably 0.3 mass% or more, and still more preferably 0.5 mass% or more, based on the total mass of the finally formed coating film layer. The content of the crosslinking agent may be set to preferably 50 mass% or less, more preferably 30 mass% or less, and still more preferably 15 mass% or less, based on the total mass of the finally formed coating film layer.

A content of the curing catalyst may be set to preferably 0.01 mass% or more, more preferably 0.05 mass% or more, and still more preferably 0.1 mass% or more, based on the total mass of the finally formed coating film layer. The content of the curing catalyst may be set to preferably 20 mass% or less, more preferably 10 mass% or less, and still more preferably 5 mass% or less, based on the total mass of the finally formed coating film layer.

(Coating Film Layer)

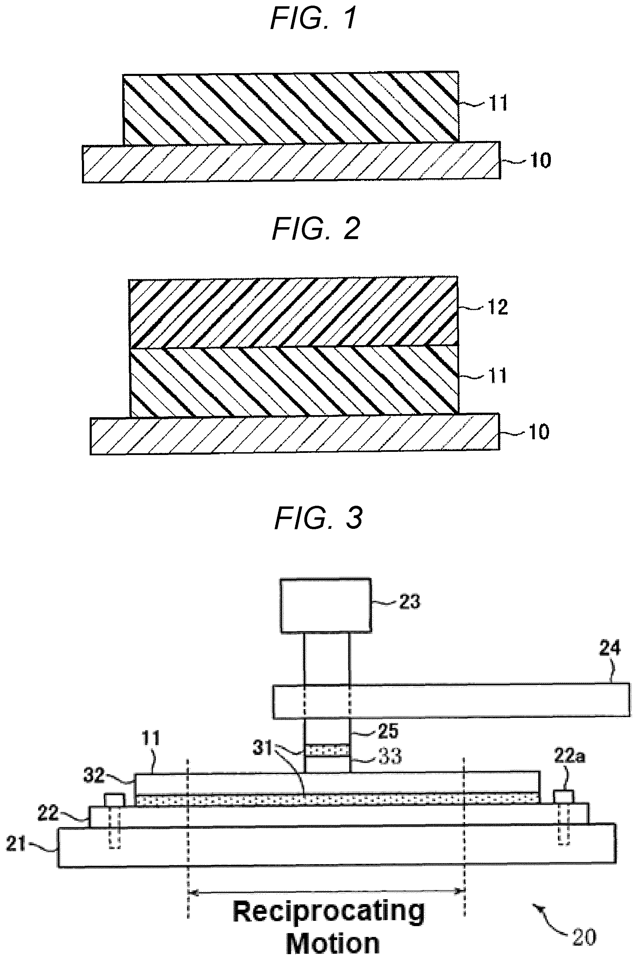

For example, as shown in FIG. 1, a first coating film layer 11 can be obtained by applying the coating material of the present invention to an object 10 to be coated.

As a coating method of the coating material of the present invention, general methods such as brush coating, spray coating, and various coater coating can be used. Coating is usually performed 1 or 2 times.

A thickness of the first coating film layer 11 is not particularly limited, and is preferably 1000 $\mu$m or less, because the oil component can easily permeate to the surface of the coating film layer, in other words, oil permeability with respect to the first coating film layer 11 is obtained, and is preferably 50 $\mu$m or more from the viewpoint of strength.

Examples of the object 10 to be coated used in the present invention include polyurethane resins, polyurethane acrylic resins, rubber-based resins, vinyl chloride resins, polyester resins, silicone resins, elastomers, fluorine resins, polyamide resins, polyolefin resins (polyethylene, polypropylene, etc.), metal plates or metal foils (aluminum, copper, silver, iron, nickel, tin, stainless steel, etc.), concrete, ceramics, etc. The object 10 to be coated may have a film shape or a sheet shape.

After the coating material of the present invention is applied to the object 10 to be coated, the coating material can be cured or dried by being left to stand in an environment of, for example, 20°C to 180°C, preferably 80°C to 150°C for, for example, 3 minutes to 3 hours, and it is most preferable to leave the object 10 to be coated in an environment of 150°C for 3 minutes.

For example, as shown in FIG. 2, a second coating film layer 12 can be formed on the first coating film layer 11 obtained from the coating material of the present invention with a top-coat coating material as necessary.

The top-coat coating material is not particularly limited, and for example, the same coating material as the coating material of the present invention can be used, but the top-coat coating material may not contain an oil component.

As a coating method of the top-coat coating material, general methods such as brush coating, spray coating, and various coater coating can be used. Coating is usually performed 1 or 2 times.

A thickness of the second coating film layer 12 is not particularly limited, but is preferably 500 $\mu$m or less, because the oil component can easily permeate to the surface of the coating film layer, in other words, oil permeability with respect to the second coating film layer 12 is obtained, and is preferably 50 $\mu$m or more from the viewpoint of strength.

A curing or drying temperature and a curing or drying time at the time of coating the first coating film layer 11 with the top-coat coating material are the same as a curing or drying temperature and a curing or drying time at the time of coating the object 10 to be coated with the coating material of the present invention.

The curing or drying of the coating material of the present invention and the curing or drying of the top-coat coating material may be performed simultaneously or separately.

[Laminate]

A laminate of the present invention includes the coating film layer obtained by curing or drying the coating material of the present invention and a pressure-sensitive adhesive layer.

The laminate of the present invention is obtained by curing or drying the coating material of the present invention in advance in a state where a thin film having a thickness of, for example, 10 $\mu$m to 1000 $\mu$m is formed to form a coating film layer, and providing the pressure-sensitive adhesive layer on the coating film layer by using a known process of related art.

The pressure-sensitive adhesive layer can be used to cause the coating film layer obtained by curing or drying the coating material of the present invention to adhere to surfaces of various objects.

The pressure-sensitive adhesive layer is not particularly limited, and examples thereof include an acrylic resin-based pressure-sensitive adhesive, an epoxy resin-based pressure-sensitive adhesive, an amino resin-based pressure-sensitive adhesive, a vinyl resin-based (such as a vinyl acetate-based polymer) pressure-sensitive adhesive, a curable acrylic resin-based pressure-sensitive adhesive, and a silicone resin-based pressure-sensitive adhesive.

The pressure-sensitive adhesive layer may be an oil-impermeable pressure-sensitive adhesive layer in order to prevent the oil component from flowing out of the coating film layer.

The oil-impermeable pressure-sensitive adhesive layer is not particularly limited, and examples thereof include an acrylic resin-based pressure-sensitive adhesive, an epoxy resin-based pressure-sensitive adhesive, an amino resin-based pressure-sensitive adhesive, a vinyl resin-based (such as a vinyl acetate-based polymer) pressure-sensitive adhesive, a curable acrylic resin-based pressure-sensitive adhesive, and a silicone resin-based pressure-sensitive adhesive.

[Examples]

Hereinafter, the present invention will be described in more detail with reference to Examples and the like, but the present invention is not limited to the following Examples.

<Preparation of Coating Film Layer>

[Example 1]

As a coating material component,

a resin component: KE-1935A (manufactured by Shin-Etsu Chemical Co., Ltd.), and KE-1935B (manufactured by Shin-Etsu Chemical Co., Ltd.); and

an oil component P: a carbinol-modified oil (manufactured by Shin-Etsu Chemical Co., Ltd., product number: KF-6003) were prepared.

The above resin component [KE-1935A (25 mass%), KE-1935B (25 mass%)] and the oil component P (50 mass%) were mixed under conditions of 25°C and 101 kPa. The obtained mixed solution was stirred with a spatula at a speed of about 120 rpm for 60 seconds, and then stirred with a disperser (LABOLUTION, manufactured by Primix Corporation) at a speed of 2000 rpm for 5 minutes to obtain a coating material.

The obtained coating material was applied to a polyethylene terephthalate (PET) film (Lumirror (registered trademark) 75-S10, manufactured by Toray Industries, Inc.) and cured by heating for 3 minutes in an environment of 150°C to form a coating film layer having a thickness of 250 μm.

[Examples 2 to 14 and Comparative Example 1]

Coating film layers having a thickness of 250 μm were formed in the same manner as in Example 1 except that the coating material component and contents of the components were as shown in Table 1.

The details of the components shown in Table 1 are as follows.

KF-6002: carbinol-modified oil manufactured by Shin-Etsu Chemical Co., Ltd.
BY 16-201: carbinol-modified oil manufactured by Dow Coming Toray Co., Ltd.
TSF-437: methylphenylsiloxane oil manufactured by Momentive Performance Co., Ltd.
KF-96-50: dimethylsiloxane oil manufactured by Shin-Etsu Chemical Co., Ltd.
KE-1935 is a 1: 1 (mass ratio) mixed solution of KE-1935A and KE-193 5B.

[Example 15]

As a coating material component,

a resin component: KE-1935A (manufactured by Shin-Etsu Chemical Co., Ltd.), and KE-1935B (manufactured by Shin-Etsu Chemical Co., Ltd.); and
an oil component P: a carbinol-modified oil (manufactured by Shin-Etsu Chemical Co., Ltd., product number: KF-6003) and a carbinol-modified oil (manufactured by Shin-Etsu Chemical Co., Ltd., product number: KF-6002) were prepared.

The above resin component [KE-1935A (28.75 mass%), KE-1935B (28.75 mass%)] and KF-6003 (25 mass%) and KF-6002 (17.5 mass%) as the oil component P were mixed under conditions of 25°C and 101 kPa. The obtained mixed solution was stirred with a spatula at a speed of about 120 rpm for 60 seconds, and then stirred with a disperser (LABOLUTION, manufactured by Primix Corporation) at a speed of 2000 rpm for 5 minutes to obtain a coating material.

The obtained coating material was applied to a polyethylene terephthalate (PET) film (Lumirror (registered trademark) 75-S10, manufactured by Toray Industries, Inc.) and cured by heating for 3 minutes in an environment of 150°C to form a coating film layer having a thickness of 250 μm.

[Comparative Example 2]

As a coating material component,

a resin component: Sylgard 184 main agent (manufactured by Dow Corning Toray Co., Ltd.), and Sylgard 184 curing agent (manufactured by Dow Coming Toray Co., Ltd.); and
an oil component P: a methylphenylsiloxane oil (manufactured by Wacker Asahikasei Silicone Co., Ltd., product number: AR-20) were prepared.

The above resin component [main agent (24.4 mass%), the curing agent (2.6 mass%)] and the oil component P (73 mass%) were mixed under conditions of 25°C and 101 kPa. The obtained mixed solution was stirred in the same manner as in Example 1 to obtain a coating material.

The obtained coating material was cured by heating in the same manner as in Example 1 to form a coating film layer having a thickness of 250 μm.

[Comparative Example 3]

As a coating material component,

a resin component: Sylgard 184 main agent (manufactured by Dow Coming Toray Co., Ltd.), and Sylgard 184 curing agent (manufactured by Dow Corning Toray Co., Ltd.);
an oil component P: a phenylsiloxane oil (manufactured by Momentive Performance Co., Ltd., product number: TSF-437); and
an oil component Q: a dimethylsiloxane oil (manufactured by Shin-Etsu Chemical Co., Ltd., product number: KF-96-100) were prepared.

The above resin component [main agent (72.7 mass%), the curing agent (7.3 mass%)], the oil component P (8 mass%), and the oil component Q (12 mass%) were mixed under conditions of 25°C and 101 kPa. The obtained mixed solution was stirred in the same manner as in Example 1 to obtain a coating material.
The obtained coating material was cured by heating in the same manner as in Example 1 to form a coating film layer having a thickness of 250 $\mu$m.

[Comparative Example 4]

A coating film layer having a thickness of 250 $\mu$m was formed in the same manner as in Comparative Example 3 except that contents of the components were changed to a resin component [main agent (63.6 mass%), a curing agent (6.4 mass%)], an oil component P (12 mass%), and an oil component Q (18 mass%).

<Evaluation>

The following evaluations were performed using the obtained coating film layers. The results are shown in Table 1.

[Wetting Parameter]

First, the value of the solubility parameter of the coating film layer and the value of the solubility parameter of the oil component P were obtained by the following method.

(Solubility Parameter)

Fourier transform nuclear magnetic resonance spectroscopy analysis was performed to examine a type and a molar ratio of the molecular unit constituting the coating film layer and the molecular structure of the oil component P. A solubility parameter (Hansen solubility parameter) of each molecular unit was determined by calculating a weighted average in terms of the molar ratio.
The Hansen solubility parameter of each molecular unit can be determined by a molecular group contribution method using software "HSPiP, Hansen Solubility Parameters in Practice ver4" available from a link (https://hansen-soLubiLity.com/). Specifically, HSP values ($\delta_d$, $\delta_p$, $\delta_h$) of the respective units can be calculated by inputting the respective constituent units in a target substance by a SMILES notation.
Further, the wetting parameter [(J/cm$^3$)$^{1/2}$] was determined by the above formula (1).

[Gel Fraction]

The coating film layer was cut into a size of 3.0 cm $\times$ 3.0 cm, and a mass (g) of the coating film layer was measured.
The cut coating film layer was placed in a vial bottle filled with 20 g of toluene and immersed in toluene at 20°C for 24 hours. Thereafter, the coating film layer was taken out of the vial bottle, dried by heating in an environment of 150°C for 2 hours in a blow dryer, and a mass (g) of the coating film layer after heating and drying was measured.
Further, the gel fraction (%) of the coating film layer was determined by the above formula (2).

[Solubility Parameter Contribution Value]

<Value of f>

$\delta_{d1}$: the energy due to the dispersing force of the compatible molecular unit, $\delta_{d2}$: the energy due to the dispersing force of the incompatible molecular unit, $\delta_{p1}$: the energy due to the dipole interaction of the compatible molecular unit, $\delta_{p2}$: the energy due to the dipole interaction of the incompatible molecular unit, $\delta_{h1}$: the energy due to the hydrogen bond of the compatible molecular unit, and $\delta_{h2}$: the energy due to the hydrogen bond of the incompatible molecular unit were obtained by the molecular group contribution method using the above-described software.

Next, the values of $f_{d1}$, $f_{d2}$, $f_{p1}$, $f_{p2}$, $f_{h1}$, and $f_{h2}$ were determined by the above formulae (3a1) to (3a6). Further, the value of f was determined by the above (3a).

[Value of $\varphi$]

The gel fraction (%) of the coating film layer was determined by the method described above.

All the oil components in the coating film layer were obtained by the following procedure.

The coating film layer was cut into a size of $2.0 \times 4.5$ cm, placed in a vial bottle filled with 20 g of toluene, and immersed in toluene at room temperature for 24 hours.

The coating film layer was taken out of the vial bottle and dried in an environment of 150°C for 2 hours in a blow dryer to obtain residues. The residues were all the oil components in the coating material.

The "mass of incompatible molecular unit contained in all oil components in coating film layer" was calculated by NMR measurement of all the oil components contained in the coating film layer. Further, the value of m was determined by the above (3b 1).

Using the gel fraction (%) and the value of m, the value of $\varphi$ was determined by the above (3b).

Further, using the value of f and the value of $\varphi$, the solubility parameter contribution value was determined by the above formula (3).

[Ice Adhesion Strength]

A subject to be measured was a force required for moving ice blocks adhering on the coating film layer in an environment of -20°C. For convenience, magnitude of this force is defined as an "ice adhesion strength" in the present specification.

The ice adhesion strength was measured by the following method.

First, a cylindrical ice block was produced. The ice block was produced by placing a stainless ring (inner diameter: 25 mm) on a bottom surface of a styrol square case 16 type (manufactured by AS ONE Corporation), pouring 6 g of pure water into the stainless ring, freezing the pure water at -20°C for 16 hours or more, and removing the stainless ring after the freezing.

Next, a PET film and the coating film layer, which are left to stand in an environment of -20°C for 16 hours, were attached to a stainless plate placed in parallel to a floor surface so that the coating film layer was on a surface of the stainless plate. The cylindrical ice block having an adhesion area of 4.9 cm$^2$ was adhered thereto.

After 3 hours from the setting of the environmental temperature to -20°C and the adhesion of the ice block, the ice block was pressed from a direction parallel to the floor surface in an environment of -20°C with a load cell (DPU-50 manufactured by Imada Co., Ltd., attachment jig A type A-4) at a speed of 0.1 mm/sec, and a load applied for 40 seconds was measured with a force gauge (ZTS-50N manufactured by Imada Co., Ltd.). A value obtained by dividing a measured maximum load by the adhesion area of 4.9 cm$^2$ was recorded as the ice adhesion strength. The test was performed three times, and an average value of these was determined.

This measurement method was determined with reference to "Investigation to Prevent Icing (Part I), Hokkaido Industrial Research Institute Report No. 292 (1993)". The ice adhesion strength decreases substantially proportionally in response to an increase in a surface oil amount at least at -20°C.

[Abrasion Resistance]

The abrasion resistance of the coating film layer was evaluated.

A Gakushin type abrasion tester (model number: RT-300S, manufactured by Daiei Scientific Seiki Seisakusho Co., Ltd.) was used as a measuring device. FIG. 3 is a schematic view of the Gakushin type abrasion tester. A Gakushin type abrasion tester 20 includes a test table 21, a support plate 22 fixed to the test table 21 by a screw 22a or the like, and a friction element 25 (size: 2 cm × 2 cm) disposed above the support plate 22 and below a cantilevered load arm 24 to which a load is applied by a weight 23.

By using the Gakushin type abrasion tester 20, with respect to the coating film layer of a test piece 32 attached to the support plate 22 via a pressure-sensitive adhesive 31 (manufactured by Nitto Denko Corporation, No. 5000NS), in particular, a region of 20 mm × 120 mm, a reduction rate of the coating film layer was determined when a water-resistant abrasive 33 having mesh roughness of #120 attached to a lower side of the friction element 25 via the pressure-sensitive adhesive 31 was reciprocated 100 times at a pressing force of 125 g/cm$^2$ adjusted by the weight 23 and the load arm 24 and at a speed of 100 mm/s. The room temperature was set to 20°C.

Evaluation criteria were as follows.

A: The reduction rate was less than 80 mass%.
B: The reduction rate was 80 mass% or more.

[Table 1]

Table 1

| | Coating Material Component | | | Content of Each Component (mass%) | | | Wetting Parameter $(J/cm^3)^{1/2}$ | Gel Fraction (%) | Solubility Parameter Contribution Value | Ice Adhesion Strength $(N/cm^2)$ | Abrasion Resistance |
|---|---|---|---|---|---|---|---|---|---|---|---|
| | Resin Component | Oil Component P | Oil Component Q | Resin Component | Oil Component P | Oil Component Q | | | | | |
| Example 1 | KE-1935 | KF-6003 | - | 50 | 50 | - | 0.08 | 50 | 1.72 | < 0.1 | A |
| Example 2 | KE-1935 | KF-6002 | - | 65 | 35 | - | 0.17 | 65 | 1.96 | < 0.1 | A |
| Example 3 | KE-1935 | KF-6002 | KF-96-50 | 40 | 30 | 30 | 0.14 | 40 | 1.65 | < 0.1 | A |
| Example 4 | KE-1935 | BY 16-201 | KF-96-50 | 67 | 10 | 23 | 0.45 | 67 | 0.95 | < 0.1 | A |
| Example 5 | KC-1935 | BY 16-201 | KF-96-50 | 70 | 10 | 20 | 0.45 | 70 | 0.95 | < 0.1 | A |
| Example 6 | KE-1935 | BY 16-201 | KF-96-50 | 80 | 10 | 10 | 0.45 | 80 | 0.95 | < 0.1 | A |
| Example 7 | KE-1935 | BY 16-201 | KF-96-50 | 90 | 8 | 2 | 0.46 | 90 | 0.76 | < 0.1 | A |
| Example 8 | KE-1935 | BY 16-201 | KF-96-50 | 40 | 13 | 47 | 0.44 | 40 | 1.24 | < 0.1 | A |
| Example 9 | KE-1935 | KF-6003 | - | 45 | 55 | - | 0.07 | 45 | 1.89 | < 0.1 | A |
| Example 10 | KE-1935 | KF-6001 | - | 80 | 20 | - | 0.37 | 80 | 1.91 | < 0.1 | A |
| Example 11 | KE-1935 | KF-6003 | KF-96-50 | 40 | 50 | 10 | 0.07 | 40 | 1.73 | < 0.1 | A |
| Example 12 | KE-1935 | KF-6003 | KF-96-1000 | 40 | 55 | 5 | 0.08 | 40 | 1.91 | < 0.1 | A |
| Example 13 | KE-1935 | KF-6002 | KF-96-1000 | 40 | 27 | 33 | 0.15 | 40 | 1.49 | < 0.1 | A |
| Example 14 | KE-1935 | BY 16-201 | KF-96-1000 | 40 | 9 | 51 | 0.46 | 40 | 0.86 | < 0.1 | A |
| Example 15 | KE-1935 | KF-6003/ KF-6002 | - | 57.5 | 42.5 | - | 0.11 | 58 | 1.83 | < 0.1 | A |
| Comparative Example 1 | KE-1935 | TSF-437 | - | 70 | 30 | - | 1.3 | 70 | 1.12 | 0.3 | A |
| Comparative Example 2 | Sylgard 184 | AR-20 | - | 27 | 73 | - | 0.13 | 27 | 0.70 | < 0.1 | B |
| Comparative Example 3 | Sylgard 184 | TSF-437 | KF-96-100 | 80 | 8 | 12 | 1.6 | 80 | 0.26 | 1 < | A |

EP 4 148 092 A1

| | Coating Material Component | | | Content of Each Component (mass%) | | | Wetting Parameter $(J/cm^3)^{1/2}$ | Gel Fraction (%) | Solubility Parameter Contribution Value | Ice Adhesion Strength $(N/cm^2)$ | Abrasion Resistance |
|---|---|---|---|---|---|---|---|---|---|---|---|
| | Resin Component | Oil Component P | Oil Component Q | Resin Component | Oil Component P | Oil Component Q | | | | | |
| Comparative Example 4 | Sylgard 184 | TSF-437 | KF-96-100 | 70 | 12 | 18 | 1.5 | 70 | 0.45 | 1 < | A |

From the results shown in Table 1, it was found that a coating film layer having high abrasion resistance and an excellent ice and/or snow adhesion prevention function was obtained from the coating material of the present invention.

Although the present invention has been described in detail and with reference to particular embodiments, it will be apparent to those skilled in the art that various changes and modifications can be made without departing from the spirit and scope of the invention. The present application is based on a Japanese Patent Application (Patent Application No. 2020-082732) filed on May 8, 2020, contents of which are incorporated herein by reference.

REFERENCE SIGNS LIST

10: Object to be coated
11: First coating film layer
12: Second coating film layer
20: Gakushin type abrasion tester
21: Test table
22: Support plate
22a: Screw
23: Weight
24: load arm
25: Friction Element
31: Pressure-sensitive adhesive
32: Test Piece
33: Water-resistant abrasive

**Claims**

1. A coating material comprising a resin component and at least one kind of oil component P, wherein

   the oil component P can exude out from a cured or dried coating film layer to which the coating material has been applied when a temperature drops to a predetermined value or less,
   a wetting parameter determined by the following formula (1) is 0.5 $(J/cm^3)^{1/2}$ or less, and
   a gel fraction of the coating film layer determined by the following formula (2) is 30% or more,

   $$\text{Wetting parameter } [(J/cm^3)^{1/2}] = |\text{value of solubility parameter of coating film layer - value of solubility parameter of oil component P}| \dots (1)$$

   (in the formula (1), the coating film layer is a coating film layer obtained by curing or drying the coating material),

   $$\text{Gel fraction } (\%) = \{\text{mass (g) of coating film layer after heating and drying/mass (g) of coating film layer}\} \times 100 \dots (2)$$

   (in the formula (2), the coating film layer is a coating film layer obtained by curing or drying the coating material, and the coating film layer after heating and drying is a coating film layer obtained by immersing the coating film layer in toluene for 24 hours and heating and drying the coating film layer in an environment of 150°C for 2 hours).

2. The coating material according to claim 1, wherein
   the wetting parameter is 0.3 $(J/cm^3)^{1/2}$ or less.

3. The coating material according to claim 1 or 2, wherein
   the gel fraction exceeds 60%.

**4.** The coating material according to any one of claims 1 to 3, further comprising an oil component Q.

**5.** The coating material according to any one of claims 1 to 4, wherein
at least one of the oil component P or the oil component Q is a carbinol-modified silicone oil or an alkyl-modified silicone oil.

**6.** The coating material according to any one of claims 1 to 5, wherein

a solubility parameter contribution value determined by the following formula (3) is 0.1 or more,

$$\text{Solubility parameter contribution value} = f \times \varphi \times 100 \ ... \ (3)$$

(in the formula (3), f is a value determined by the following formula (3a), and $\varphi$ is a value determined by the following formula (3b)),

$$f = ((f_{d1} - f_{d2})^2 + (f_{p1} - f_{p2})^2 + (f_{h1} - f_{h2})^2)^{0.5} \ ... \ (3a)$$

(in the formula (3a), fai is a value determined by the following formula (3a1), $f_{d2}$ is a value determined by the following formula (3a2), $f_{p1}$ is a value determined by the following formula (3a3), $f_{p2}$ is a value determined by the following formula (3a4), $f_{h1}$ is a value determined by the following formula (3a5), and $f_{h2}$ is a value determined by the following formula (3a6)),

$$f_{d1} = \delta_{d1}/(\delta_{d1} + \delta_{p1} + \delta_{h1}) \ ... \ (3a1)$$

$$f_{d2} = \delta_{d2}/(\delta_{d2} + \delta_{p2} + \delta_{h2}) \ ... \ (3a2)$$

$$f_{p1} = \delta_{p1}/(\delta_{d1} + \delta_{p1} + \delta_{h1}) \ ... \ (3a3)$$

$$f_{p2} = \delta_{p2}/(\delta_{d2} + \delta_{p2} + \delta_{h2}) \ ... \ (3a4)$$

$$f_{h1} = \delta_{h1}/(\delta_{d1} + \delta_{p1} + \delta_{h1}) \ ... \ (3a5)$$

$$f_{h2} = \delta_{h2}/(\delta_{d2} + \delta_{p2} + \delta_{h2}) \ ... \ (3a6)$$

(in the formulae (3a1) to (3a6),

$\delta_{d1}$ is energy $(J/cm^3)^{1/2}$ due to a dispersing force of a compatible molecular unit,
$\delta_{d2}$ is energy $(J/cm^3)^{1/2}$ due to a dispersing force of an incompatible molecular unit,
$\delta_{p1}$ is energy $(J/cm^3)^{1/2}$ due to a dipole interaction of the compatible molecular unit,
$\delta_{p2}$ is energy $(J/cm^3)^{1/2}$ due to a dipole interaction of the incompatible molecular unit,
$\delta_{h1}$ is energy $(J/cm^3)^{1/2}$ due to a hydrogen bond of the compatible molecular unit,
$\delta_{h2}$ is energy $(J/cm^3)^{1/2}$ due to a hydrogen bond of the incompatible molecular unit,
the compatible molecular unit is a molecular unit that exists in the largest amount in the coating film layer obtained by curing or drying the coating material, and
the incompatible molecular unit is a molecular unit in the oil component P for which a difference in solubility parameter from the compatible molecular unit is 0.01 $(J/cm^3)^{1/2}$ or more),

$$\varphi = (1 - \text{gel fraction (\%)}/100) \times m \ ... \ (3b)$$

(in the formula (3b), the gel fraction (%) is a value determined by the formula (2), and m is a value determined by the following formula (3b1)),

$$m = \{\text{mass (g) of incompatible molecular unit contained in all oil components in coating film layer/mass (g) of all oil components in coating film layer}\} \dots \text{(3b1)}$$

(in the formula (3b1), the "mass of incompatible molecular unit contained in all oil components in coating film layer" is calculable by NMR measurement of all the oil components contained in the coating film layer obtained by curing or drying the coating material, and all the oil components are residues obtained by immersing the coating film layer in toluene for 24 hours and drying the coating film layer in an environment of 150°C for 2 hours).

7. A laminate comprising the coating film layer obtained by curing or drying the coating material according to any one of claims 1 to 6 and a pressure-sensitive adhesive layer.

## FIG. 1

## FIG. 2

## FIG. 3

**Reciprocating Motion**

## INTERNATIONAL SEARCH REPORT

| | International application No. |
|---|---|
| | PCT/JP2021/017311 |

**A. CLASSIFICATION OF SUBJECT MATTER**
C09D 5/00(2006.01)i; C09D 201/00(2006.01)i; C09K 3/18(2006.01)i; C09D
7/65(2018.01)i; C09J 7/22(2018.01)i; C09J 7/38(2018.01)i
FI: C09D201/00; C09D7/65; C09D5/00 Z; C09K3/18; C09J7/22; C09J7/38
According to International Patent Classification (IPC) or to both national classification and IPC

**B. FIELDS SEARCHED**

Minimum documentation searched (classification system followed by classification symbols)
C09D5/00; C09D201/00; C09K3/18; C09D7/65; C09J7/22; C09J7/38

| Documentation searched other than minimum documentation to the extent that such documents are included in the fields searched | |
|---|---|
| Published examined utility model applications of Japan | 1922–1996 |
| Published unexamined utility model applications of Japan | 1971–2021 |
| Registered utility model specifications of Japan | 1996–2021 |
| Published registered utility model applications of Japan | 1994–2021 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 62-252477 A (CHUGOKU MARINE PAINTS, LTD.) 04 November 1987 (1987-11-04) claims, examples, comparative examples | 1-7 |
| A | JP 2003-328308 A (MITSU-UMA CO., LTD.) 19 November 2003 (2003-11-19) claims, examples | 1-7 |
| A | WO 2018/223781 A1 (LUOYANG INSTITUTE OF CUTTING – EDGE TECHNOLOGY) 13 December 2018 (2018-12-13) claims | 1-7 |
| A | WO 2018/182023 A1 (NITTO DENKO CORP.) 04 October 2018 (2018-10-04) claims, examples | 1-7 |
| P, X | WO 2020/096071 A1 (NITTO DENKO CORP.) 14 May 2020 (2020-05-14) claims, examples 14-15, 19-20 | 1-7 |

☒  Further documents are listed in the continuation of Box C.       ☒  See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 01 July 2021 (01.07.2021) | 13 July 2021 (13.07.2021) |

| Name and mailing address of the ISA/ | Authorized officer |
|---|---|
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

**INTERNATIONAL SEARCH REPORT**

| International application No. |
|---|
| PCT/JP2021/017311 |

C (Continuation).   DOCUMENTS CONSIDERED TO BE RELEVANT

| Category* | Citation of document, with indication, where appropriate, of the relevant passages | Relevant to claim No. |
|---|---|---|
| P, X | WO 2020/096070 A1 (NITTO DENKO CORP.) 14 May 2020 (2020-05-14) claims, example 12 | 1-7 |

Form PCT/ISA/210 (continuation of second sheet) (January 2015)

| INTERNATIONAL SEARCH REPORT<br>Information on patent family members | | International application No.<br><br>PCT/JP2021/017311 | |
|---|---|---|---|
| Patent Documents<br>referred in the<br>Report | Publication<br>Date | Patent Family | Publication<br>Date |
| JP 62-252477 A | 04 Nov. 1987 | (Family: none) | |
| JP 2003-328308 A | 19 Nov. 2003 | (Family: none) | |
| WO 2018/223781 A1 | 13 Dec. 2018 | CN 109233618 A<br>claims | |
| WO 2018/182023 A1 | 04 Oct. 2018 | US 2020/0032109 A1<br>claims, examples<br>EP 3604466 A1<br>CN 110475833 A<br>JP 2018-172676 A | |
| WO 2020/096071 A1 | 14 May 2020 | (Family: none) | |
| WO 2020/096070 A1 | 14 May 2020 | (Family: none) | |

Form PCT/ISA/210 (patent family annex) (January 2015)

**REFERENCES CITED IN THE DESCRIPTION**

**Patent documents cited in the description**

- JP 2000026844 A

- JP 2020082732 A